# EUROPEAN PATENT SPECIFICATION

(11) **EP 2 654 457 B1**
(45) Date of publication and mention of the grant of the patent: **14.11.2018**
(21) Application number: 11808841.8
(22) Date of filing: 14.12.2011
(51) Int. Cl.: A23L 2/66, A23L 2/52, A23L 29/206, A23L 5/44, A23L 33/115, A23L 33/155, A23L 33/185, A23K 20/174, A23K 20/179, A23K 20/147, A23K 20/158

(54) **COMPOSITIONS OF FAT-SOLUBLE ACTIVE INGREDIENTS CONTAINING PLANT PROTEIN-SOY POLYSACCHARIDE COMPLEXES**
ZUSAMMENSTZUNGEN VON FETTLÖSLICHEN INHALTSSTOFFEN MIT PROTEIN-POLYSACCHARID-KOMPLEXEN
COMPOSITIONS D'INGREDIENTS ACTIFS LIPOSOLUBLES CONTENANT DES COMPLEXES DE PROTEINE-POLYSACCHARIDE

(30) Priority: 23.12.2010 CN 201010614218; 22.07.2011 WO PCT/CN2011/001207
(43) Date of publication of application: 30.10.2013
(73) Proprietor: DSM IP Assets B.V., 6411 TE Heerlen (NL)
(72) Inventor: DENG, Wei, Shanghai 200438 (CN); LEUENBERGER, Bruno, CH-4310 Rheinfelden (CH); VIDONI, Olivia, F-68300 Saint Louis (FR); YAO, Ping, Shanghai 200433 (CN); YIN, Baoru, Shanghai 200433 (CN)
(74) Representative: Kurt, Manfred
(86) International application number: PCT/EP2011/072690
(87) International publication number: WO 2012/084624

(56) References cited:
- EP-A1- 1 698 239
- EP-A1- 1 776 873
- EP-A1- 2 238 843
- WO-A1-2011/088941
- HIDEFUMI ET ALL.: "Autoxidation kinetic analysis of docosahexaenoic acid ethyl ester and docosahexaenoic triglyceride with oxygen sensor.", BIOSCIENCE, BIOTECHNOLOGY AND BIOCHEMISTRY, vol. 66, no. 4, 2002, pages 749-753, XP002674872, ISSN: 0916-8451
- DATABASE WPI Week 200765 Thomson Scientific, London, GB; AN 2007-695663 XP002674873, & JP 2007 215474 A (MORINAGA & CO LTD) 30 August 2007 (2007-08-30) & JP 2007 215474 A (MORINAGA & CO) 30 August 2007 (2007-08-30)
- DATABASE WPI Week 200473 Thomson Scientific, London, GB; AN 2004-741288 XP002674874, & JP 2004 298047 A (MORINAGA & CO LTD) 28 October 2004 (2004-10-28) & JP 2004 298047 A (MORINAGA & CO) 28 October 2004 (2004-10-28)
- DATABASE WPI Week 200958 Thomson Scientific, London, GB; AN 2009-M60649 XP002674875, & CN 101 496 541 A (SHANDONG WANDEFU IND GROUP CO LTD) 5 August 2009 (2009-08-05)

## Description

The present invention relates to compositions comprising one or more plant proteins, one or more soy soluble polysaccharides and one or more fat-soluble active ingredients. These compositions can be used for the enrichment, fortification and/or coloration of food beverages, animal feed and/or cosmetics. The present invention also refers to the preparation of such compositions. The present invention furthermore refers to a process for the manufacture of a beverage by mixing the compositions with ingredients of beverages.
Compositions to enrich fortify or color food, beverages, animal feed or cosmetics which contain fat-soluble active ingredients, for example beta-carotene, are known in the art. Beta-Carotene is a preferable colorant compound due to its intense and for the above-mentioned applications very pleasing orange color. Since the final products in which these colorants, nutrients, and/or additives are used are usually aqueous compositions such as beverages, additional compounds have to be added to avoid separation of fat (oil) phases in the product, which would render the corresponding product unacceptable.
Therefore, fat-soluble active ingredients are often combined with auxiliary compounds, such as starches or fish gelatin, in order to prevent phase separation in the final aqueous composition. Those auxiliary compounds, however, often have a negative influence on the color properties and the nutritional properties of the final products. It is therefore desired to develop new compositions of fat-soluble active ingredients, which contain improved auxiliary compounds, which have very good properties referring to taste, emulsification, emulsion stability, film forming ability and/or color of the final product in which it is used.
Proteins have been used as emulsifiers in food products for many years [E. Dickinson, D.J. McClements, Molecular basis of protein functionality, in: E. Dickinson, D.J. McClements (Eds.), Advances in Food Colloids, Blackie Academic & Professional, London, UK, 1995, pages 26-79]. However, the emulsification capacity may be lost at or near the isoelectric point, i.e. at a certain protein specific pH at which the net charges and solubility of the particular protein are minimal. Furthermore the emulsion stability decreases due to the screening of the electrostatic repulsion of protein in the presence of high concentration of salts. Most proteins have an isoelectric point below pH 7. Most foods and beverages are acidic; therefore the poor emulsion stability at the isoelectric point limits the applicability of proteins in food and beverage industries.

The stability of protein containing oil-in-water emulsions depends strongly on the charge density and structure of the emulsifier adsorbed on the emulsion droplet surface. The protein adsorption layers prevent the drop-drop coalescence by stabilizing the emulsion films. However, protein-stabilized emulsions are highly sensitive to environmental stresses such as pH and ionic strength [Rungnaphar Pongsawatmanit, Thepkunya Harnsilawat, David J. McClements, Colloids and Surfaces A: Physicochem. Eng. Aspects, 287, 59-67, 2006]. When the aqueous pH approaches the isoelectric point of a protein and/or the salt concentration is high, the electrostatic repulsion of the protein layers decreases and, therefore, protein precipitation, emulsion droplet coalescence and creaming occur [Eric Dickinson Soft Matter, 2008, 4, 932-942].

Proteins as emulsifiers do not function effectively at pH values close to their isoelectric point because they precipitate [N.G. Diftisa, C.G. Biliaderisb, V.D. Kiosseoglou, Food Hydrocolloids 19 (2005) 1025-1031].

The emulsion stability may be improved by forming protein-polysaccharide conjugates produced through covalent binding [Eric Dickinson Soft Matter, 2008, 4, 932-942]. The protein-polysaccharide conjugates have improved emulsifying and steric stabilizing properties, especially under conditions where the protein alone has poor solubility [Eric Dickinson Soft Matter, 2008, 4, 932-942].

The improvement of emulsifying properties of soybean protein by conjugation with polysaccharide has also been reported [N. Diftis and V. Kiosseoglou, FoodChemistry, 81, 1, 2003; N. Diftis and V. Kiosseoglou, Food Hydrocolloids, 20, 787, 2006; N.G. Diftis, et al., Food Hydrocolloids, 19, 1025, 2005; N. Diftis and V. Kiosseoglou, Food Chemistry, 96, 228]. Protein-polysaccharide conjugations can improve emulsifying properties of proteins, especially through oil droplet size reduction and emulsion stabilization. These conjugates can be produced by Maillard-type reactions between protein and polysaccharide, or by other reactions. Xu and Yao, (Langmuir 2009, 25 (17), 9714-9720) have also described oil-in-water emulsions prepared from soy protein-dextran conjugates. The conjugates are adsorbed at the interface together with unreacted protein constituents, enhancing steric stabilization forces of oil droplets. However, the Maillard type reaction is a time-consuming process that is poorly amenable to industrial scale reaction. Therefore, the use of such conjugates remains inadequate in food and beverage applications.

EP2238843 discloses compositions containing one or more proteins, one or more polysaccharides and one or more fat-soluble active ingredients. These compositions can be used for the enrichment, fortification and/or coloration of food beverages, animal feed and/or cosmetics.

Therefore, there is still a need for compositions comprising fat-soluble active ingredients for the enrichment, fortification and/or coloration of food, beverages, animal feed, cosmetics or pharmaceutical compositions which do not show the above-mentioned problems.

It was therefore an object of the present invention to provide compositions of fat-soluble active ingredients having the desired properties as indicated above, e.g. very good properties referring to optical clarity and emulsion stability and/or an improved color intensity and color stability (wherever applicable). It was also an objective of the invention to improve the process for the preparation of compositions of fat-soluble active ingredients.

This objective has been solved by a composition comprising:
a) 0.1 to 70 weight-% based on the composition of one or more fat-soluble active ingredients selected from the group consisting of lipophilic health ingredients; carotenoids as well as mixtures thereof;
b) one or more plant protein(s) selected from the group consisting of soy protein, lupin protein, pea protein and potato protein.; and
c) one or more soy soluble polysaccharide(s);
   wherein the lipophilic health ingredient(s) (one or more compounds) are selected from the group consisting of resveratrol; ligusticum; ubichinones and/or ubiquinols (one or more components), preferred coenzyme Q 10, coenzyme Q 9, and/or their reduced forms (the corresponding ubiquinols); genistein and alpha-lipoic acid, and
   wherein the sum of the amount of protein(s) and the amount of polysaccharide(s) represents 10 to 85 weight-% based on the composition in dry matter and,
   wherein the weight ratio of protein(s) to polysaccharide(s) is chosen like 1 : b with the proviso that b is comprised between 0.5 and 15.

As used herein, the term "fat-soluble active ingredient" refers to lipophilic health ingredients carotenoids as well as mixtures thereof.

According to the present invention preferred lipophilic health ingredients are resveratrol; ligusticum; ubichinones and/or ubiquinols (one or more components) selected from coenzyme Q 10 (also referred to as "CoQ10"), coenzyme Q 9, and/or their reduced forms (the corresponding ubiquinols); genistein and/or alpha-lipoic acid.

Especially preferred fat-soluble active ingredients of the invention are carotenoids, especially beta-carotene, lycopene, lutein, bixin, astaxanthin, apocarotenal, beta-apo-8'-carotenal, beta-apo-12'-carotenal, canthaxanthin, cryptoxanthin, citranaxanthin and zeaxanthin. Most preferred is beta-carotene.

In an preferred embodiment of the invention, the composition comprises between 0.1 and 30 weight-%, further preferred between 0.2 and 20 weight-%, most preferred between 0.5 and 15 weight-% of one or more fat-soluble active ingredients, based on the total composition.

According to the present invention plant protein (s) are derived from soy, lupin (e.g. L. albus, L. angustifolius or varieties thereof), pea and/or potato. The proteins may be isolated from any part of the plant, including fruits (like e.g. soy beans), seeds (including prepared or processed seeds) and the like; or from whole flour or defatted products such as shred, flakes etc.

For the composition of the present invention, especially preferred are soy and pea protein, even more preferred soy protein is "acid soluble soy protein" (Soyasour 4000K, with a protein content greater or equal to 60 weight-%). Most preferred is Soyasour 4000K, with a protein content greater or equal to 80 weight-%, moisture, below or equal to 7.5 weight-%, fat below or equal to 1.5 weight-%, pH 3.6 to 6.4) It can be sourced from Jilin Fuji Protein Co. Ltd. Preferred Pea protein source is from Cosucra SA (Warcoing, Belgium)

The term "soy soluble polysaccharide" as used herein refers to Soy soluble polysaccharide with a content greater or equal to 60 weight-% polysaccharides. Most preferred soy soluble polysaccharide is soy soluble polysaccharide with a content greater or equal to 70 weight-% polysaccharides, smaller or equal to 10 weight-% protein, smaller or equal to 1 weight-% fat, smaller or equal to 8 weight-% moisture, smaller or equal to 8 weight-% ash, and a pH comprised between 3 to 6. It can be sourced from Fuji Co., Ltd.

It is preferred to choose the weight ratio of protein(s) to polysaccharide(s) like 1 : b with the proviso that b is comprised from 1 to 7, more preferred from 3 to 7, most preferred from 4 to 5.

In an especially preferred embodiment of the present invention stable protein-soy soluble polysaccharide emulsifiers are formed by subsequent heating of the emulsion.

Accordingly, the invention also relates to a process for the manufacture of a stable emulsifier composition as indicated above comprising the following steps (the process can be carried out using the ingredients in amounts as specified herein):
I) suspending the protein in water;
II) optionally removing not-dissolved protein from the suspension of step I);
III) mixing one or more soy soluble polysaccharide(s) in a weight ratio of protein(s) to polysaccharide(s) of from 1 : 0.5 to 1 : 15;
IV) adjusting the pH to a value comprised between 3 and 5
V) adding the organic phase, comprising the one or more fat-soluble active ingredients to the complex, wherein fat-soluble active ingredients are selected from the group consisting of carotenoids, resveratrol; ligusticum; ubichinones and/or ubiquinols (one or more components), preferred coenzyme Q 10, coenzyme Q 9, and/or their reduced forms (the corresponding ubiquinols); genistein and alpha-lipoic acid,
VI) homogenizing the mixture of step V) with a conventional emulsification process known to the person skilled in the art.
VII) heating the emulsion at a temperature comprised between 70 to 95°C, preferably 80 to 90°C for at least 45 minutes, preferably, at least 1 hour
VIII) optionally drying the emulsion of step VII).

According to the present invention preferred proteins are plant proteins as described above.

The drying step may be carried out with any conventional drying process known to the person skilled in the art, preferred are spray drying and/or a powder catch process where sprayed suspension droplets are caught in a bed of an adsorbant such as starch or calcium silicate or silicic acid or calcium carbonate or mixtures thereof and subsequently dried.
The emulsion of step VII) may be used as it is or dried for later use.
Homogenization can be performed with standard emulsification techniques like ultrasonication or high pressure homogenization (800 to 1200 bar).
Ultrasonication generates alternating low-pressure and high-pressure waves in liquids, leading to the formation and violent collapse of small vacuum bubbles. This phenomenon, called cavitation, causes high speed impinging liquid jets and strong hydrodynamic shear-forces, combined with compression, acceleration, pressure drop, and impact, causing the disintegration of particles and dispersion throughout the product as well as the mixing of reactants. (Encyclopedia of emulsion technology, 1983, Vol 1, P. Walstra, page 57, Ed P. Becher, ISBN: 0-8247-1876-3)
In the case of the high pressure homogenization process, the mixture containing already the organic and the aqueous phases is passed through a gap in the homogenizing valve; this creates conditions of high turbulence and shear, combined with compression, acceleration, pressure drop, and impact, causing the disintegration of particles and dispersion throughout the product. The size of the particles depends on the operating pressure used during the process and the type of gap selected. (Food and Bio Process Engineering, Dairy Technology, 2002, H.G. Kessler, Ed A. Kessler, ISBN 3-9802378-5-0).
The most preferred homogenization to carry out the present invention is high pressure homogenization according to (Donsi et al. J. Agric. Food Chem., 2010, 58:10653-10660) in view of the efficiency and high throughput of this technology to produce nanoemulsions.

The present invention is also directed to the use of compositions as described above for the enrichment, fortification and/or coloration of food, beverages, animal feed, cosmetics or pharmaceutical compositions.

Beverages are described, wherein the composition of the present invention can be used as a colorant or an additive ingredient can be carbonated beverages e.g., flavored seltzer waters, soft drinks or mineral drinks, as well as non-carbonated beverages e.g. flavored waters, fruit juices, fruit punches and concentrated forms of these beverages. They may be based on natural fruit or vegetable juices or on artificial flavors. Also alcoholic beverages and instant beverage powders are described. Besides, sugar containing beverages diet beverages with non-caloric and artificial sweeteners are also described.

Further, dairy products are described, obtained from natural sources or synthetic, wherein the composition of the present invention can be used as a colorant or as a nutritional ingredient. Typical examples of such products are milk drinks, ice cream, cheese, yogurt and the like. Milk replacing products such as soymilk drinks and tofu products are also comprised within this range of application.

Also sweets are described, wherein the composition of the present invention can be used as a colorant or as an additive ingredient, such as confectionery products, candies, gums, desserts, e.g. ice cream, jellies, puddings, instant pudding powders and the like.

Also cereals, snacks, cookies, pasta, soups and sauces, mayonnaise, salad dressings and the like are described, wherein the composition of the present invention can be used as a colorant or a nutritional ingredient. Furthermore, fruit preparations used for dairy and cereals are also described. The final concentration of the one or more fat-soluble active ingredients, preferred carotenoids, especially beta-carotene, which is added via the compositions of the present invention to the food products may preferably be from 0.1 to 50 ppm, particularly from 1 to 30 ppm, more preferred 3 to 20 ppm, e.g. about 6 ppm, based on the total weight of the food composition and depending on the particular food product to be colored or fortified and the intended grade of coloration or fortification.

The food compositions described are preferably obtained by adding to a food product the fat-soluble active ingredient in the form of a composition of this invention. For coloration or fortification of a food or a pharmaceutical product a composition of this invention can be used according to methods per se known for the application of water dispersible solid product forms.
In general the composition may be added either as an aqueous stock solution, a dry powder mix or a pre-blend with other suitable food ingredients according to the specific application. Mixing can be done e.g. using a dry powder blender, a low shear mixer, a high-pressure homogenizer or a high shear mixer depending on the formulation of the final application. As will be readily apparent such technicalities are within the skill of the expert.
The invention also relates to a process for the manufacture of a beverage comprising the steps mixing the composition of the invention with further usual ingredients of beverages.

### Brief description of the figures:

Figure 1 shows real time DLS (dynamic light scattering) result of emulsions digested for 170 minutes.
Figure 2 shows (A) ζ-potential of pea protein solution and supernatant as a function of pH. (B) ζ-potential of individual pea protein and soy polysaccharide solutions as a function of pH.
Figure 3 shows the visible spectra of β-carotene emulsion before and after the addition of FeCl₃.
Figure 4 shows the visible spectra of β-carotene emulsion before and after the addition of FeCl₃. The emulsion was digested by typsin and pectinase.

The present invention is further illustrated by the following examples, which are not intended to be limiting.

### Examples

### Example 1: Production of a stable emulsion with soy protein/soy soluble polysaccharide

### Materials

Soy protein is from Jilin Fuji Protein Co. Ltd. (Soyasour 4000K, acid soluble soy protein; ASSP) with protein content 88 % (dry basis). It has an isoelectric point around pH 4.7. Soy soluble polysaccharides (SSP) with 70 to 80 weight-% polysaccharides were sourced from Fuji Co., Ltd.

### Preparation of protein/soy soluble polysaccharide emulsion

The preparation of the complexes is performed in situ in two steps: first mixing both products (ASSP and SSP) before homogenization and then heating the emulsion to 80 °C to fix the structure created. The acid soluble soy protein (ASSP) and soy soluble polysaccharide (SSP) are mixed at pH 3.25, and stirred 3 to 4 hours. Soybean oil was then added into the aqueous mixture solution of ASSP-SSP. The resulting solution was homogenized at room temperature with a homogenizer (FJ200-S, Shanghai Specimen Model Co) at 10000 rpm for 1 min. and immediately homogenized at 800 bar for 2.5 min. (AH100D, ATS engineering Inc). Finally, the emulsion was heated at 80 °C for 1 hour.

### Particle Size Measurement

Freshly diluted emulsion samples with the same pH and NaCl concentration were used for every dynamic light scattering (DLS) measurement. The measurements were carried out on a Malvern Autosizer 4700 (Malvern Instruments, Worcs, UK) equipped with a multi-x digital time correlator (Malvern PCS7132) and a solid-state laser (Compass 315M-100, Coherent Inc.; output power ≈ 100 mW, λ = 532 nm). The measurements were performed at 25 °C and a fixed scattering angle of 90°. The measured time correlation functions were analyzed by Automatic Program equipped with the correlator. The particle size (z-average hydrodynamic diameter, Dₕ) was obtained by automatic mode analysis. Two batches of samples were measured and averaged data was reported.

### Example 2: Stability of the emulsion at high salt concentration

The soy protein ASSP and soy soluble polysaccharide SSP were mixed at pH 3.25. The homogenization condition is as follows: protein concentration 5 mg/ml, weight ratio of protein to polysaccharides 1:5, 10 % oil volume fraction, 800 bar homogenization for 2.5 minutes, follow by a heating process or not. After overnight storage at 4 °C, the pH of the resulting emulsions was adjusted to 5.0 or 6.0, and NaCl was added, then, the emulsions were kept at 4 °C to investigate long-term stability. The droplet size distribution of the emulsions was measured by dynamic light scattering (DLS). The DLS samples were prepared by diluting the emulsions with freshly prepared aqueous solution having the same pH value and the same salt concentration.

After the heating process, the droplet size distributions of the emulsions do not change significantly compared with the emulsions without heating. However, their stabilities are different as shown in Table 1 and Table 2. The heated emulsions exhibit a long-term stability in pH 5.0 and 6.0 media containing salt.

**Table 1: Particle size of freshly prepared emulsions/heated emulsions at pH 5 and pH 6 at different sodium chloride concentrations. The experiment was repeated with two different batches labelled (1) and (2) to assess reproducibility of the data.**

| | | **Particle Size, nm** | | | | |
|---|---|---|---|---|---|---|
| **NaCl concentration (M)** | | **0.02** | **0.05** | **0.1** | **0.15** | **0.20** |
| **Emulsion at pH 5** | **(1)** | 285 | 301 | 365 | 396 | 406 |
| | **(2)** | 284 | 309 | 378 | 403 | 412 |
| **Heated emulsion at pH 5** | **(1)** | 255 | 268 | 292 | 293 | 306 |
| | **(2)** | 263 | 267 | 294 | 299 | 307 |
| **Emulsion at pH 6** | **(1)** | 343 | 363 | 435 | 460 | 486 |
| | **(2)** | 346 | 372 | 434 | 466 | 489 |
| **Heated emulsion at pH 6** | **(1)** | 286 | 276 | 294 | 297 | 301 |
| | **(2)** | 287 | 279 | 298 | 304 | 299 |

**Table 2: Particle size of emulsions/heated emulsions at pH 5 and pH 6 at different sodium chloride concentrations after 108 days of storage. The experiment was repeated with two different batches labelled (1) and (2) to assess reproducibility of the data. The unheated emulsions in pH 5 and 6 media containing 0.15 and 0.2 M NaCl presented creaming during the storage. The heated emulsions were homogenous in appearance after the storage.**

| | | **Particle Size, nm** | | | | |
|---|---|---|---|---|---|---|
| **NaCl concentration (M)** | | **0.02** | **0.05** | **0.1** | **0.15** | **0.20** |
| **Emulsion at pH 5** | **(1)** | 295 | 329 | 353 | 350 | 628 |
| | **(2)** | 301 | 333 | 359 | 387 | 625 |
| **Heated emulsion at pH 5** | **(1)** | 289 | 291 | 309 | 311 | 322 |
| | **(2)** | 284 | 287 | 308 | 311 | 334 |
| **Emulsion at pH 6** | **(1)** | 383 | 372 | 513 | 702 | 805 |
| | **(2)** | 397 | 406 | 547 | 709 | 827 |
| **Heated emulsion at pH 6** | **(1)** | 287 | 301 | 321 | 353 | 344 |
| | **(2)** | 285 | 304 | 328 | 351 | 350 |

### Example 3: Stability of the emulsion at different pH

The emulsions were prepared at pH 3.25, with a protein concentration of 5 mg/ml, and a weight ratio of protein to polysaccharides 1:5, 10 % oil volume fraction, 800 bar homogenization for 2.5 minutes, heating at 80 °C for 1 h or without heating. Then, the pH of the emulsions was adjusted to different values and the emulsions were stored at 4 °C to investigate the stability. For the emulsions that underwent heat process, the emulsions are homogenous in the pH range of 2-8 after 140 and 145 days of storage. However, creaming appeared for the unheated emulsions in pH 7 and 8 medium after 20 days of storage; later, creaming also happened for the unheated emulsions in pH 2 and pH 6 medium. Table 3 shows that the sizes increase at pH 2 and also increase from pH 5 to 8; the unheated emulsions increase much more than the heated emulsions before and after the storage. The result shown in Table 3 further confirms that the heating process is necessary to increase the stability of the emulsions prepared by high pressure homogenization.

**Table 3: Particle size of emulsions at different pH of freshly prepared and of emulsions stored for 140 to 145 days. The experiment was repeated with two different batches labelled (1) and (2) to assess reproducibility of the data.**

| | | **Particle Size, nm** | | | | | | | |
|---|---|---|---|---|---|---|---|---|---|
| **pH** | | **3.25** | **2** | **3** | **4** | **5** | **6** | **7** | **8** |
| **Fresh Emulsion** | **(1)** | 238 | 400 | 239 | 239 | 263 | 327 | 457 | 507 |
| | **(2)** | 227 | 434 | 230 | 224 | 283 | 338 | 428 | 481 |
| **Emulsion after 145 days storage** | **(1)** | 254 | 634 | 262 | 271 | 289 | 425 | 571 | 654 |
| **Emulsion after 140 days storage** | **(2)** | 256 | 753 | 248 | 230 | 272 | 412 | 583 | 643 |
| **Fresh Heated emulsion** | **(1)** | 245 | 263 | 245 | 239 | 256 | 280 | 314 | 321 |
| | **(2)** | 232 | 283 | 236 | 229 | 262 | 284 | 299 | 314 |
| **Heated emulsion after 145 days storage** | **(1)** | 264 | 293 | 266 | 276 | 289 | 312 | 344 | 378 |
| **Heated emulsion after 140 days storage** | **(2)** | 257 | 304 | 243 | 250 | 275 | 312 | 340 | 367 |

### Example 4: Particle size of freshly prepared heated emulsions performed with Soy Protein alone or Soy soluble polysaccharides alone at different pH.

The stability of the emulsions prepared with individual acid soluble soy proteins (ASSP) and individual soy soluble polysaccharides (SSP) were also investigated (see Table 4) in comparison with ASSP/SSP complex emulsions. The emulsions were prepared at the condition of pH 3.25, protein concentration 5 mg/ml or polysaccharide concentration 25 mg/ml, 10 % oil volume fraction, 800 bar homogenization for 2.5 minutes, heating at 80 °C for 1 h. Then, the pH of the emulsions was adjusted to different values and the emulsions were stored at 4 °C. For fresh ASSP emulsions, creaming appeared at pH range of 5-8. After 1 week of storage, creaming appeared for all of the samples, except ASSP emulsion at pH 3.25. This result supports the conclusion that the ASSP/ SSP complex emulsions are superior to individual ASSP and SSP emulsions.

**Table 4: Particle size of freshly prepared SSP or ASSP emulsions at different pH. The experiment was repeated with two different batches labelled (1) and (2) to assess reproducibility of the data.**

| | | **Particle Size, nm** | | | | | | |
|---|---|---|---|---|---|---|---|---|
| **pH** | | **3.25** | **3** | **4** | **5** | **6** | **7** | **8** |
| **Heated SSP emulsion** | **(1)** | 519 | 630 | 1024 | 1088 | 997 | 980 | 834 |
| | **(2)** | 544 | 609 | 863 | 975 | 908 | 854 | 817 |
| **Heated ASSP emulsion** | **(1)** | 247 | 268 | 313 | creaming | | | |
| | **(2)** | 254 | 278 | 316 | creaming | | | |

### Example 5: Influence of protein/polysaccharide complexation pH on homogenization

Homogenization was performed at different pH values to investigate the influence of the complex formation on the stability of the emulsions. The homogenization condition is as follows: adjusting ASSP and SSP solutions to desired pH, mixing ASSP and SSP solutions with the same pH, protein concentration 5 mg/ml, weight ratio of protein to polysaccharides 1:5, 10% oil volume fraction, 800 bar homogenization for 3-4 minutes. The results shown in Table 5 and 6 indicate that homogenization in the pH range of 3-4 can produce stable emulsions. In this pH range, ASSP and SSP form electrostatic complexes, indicating that the complex formation is essential to produce the droplets with the structure of ASSP/SSP complex membrane in oil-water interface, and a SSP shell that stabilizes the droplets in aqueous solution.

**Table 5: DLS result of fresh emulsions homogenized at different pH. The experiment was repeated with two different batches labelled (1) and (2) to assess reproducibility of the data.**

| | | **Homogenizing pH** | | | | | | | | |
|---|---|---|---|---|---|---|---|---|---|---|
| | | **3** | **3.25** | **3.50** | **3.75** | **4** | **5** | **6** | **7** | **8** |
| **Particle Size, (nm)** | **(1)** | 224 | 232 | 227 | 236 | 242 | 393 | - | - | - |
| | **(2)** | 223 | 224 | 230 | 231 | 232 | 493 | 4532 | 4621 | 2132 |

**Table 6: DLS result of the emulsions shown in Table 5 after 2 months of storage. The experiment was repeated with two different batches labelled (1) and (2) to assess reproducibility of the data.**

| | | **Homogenizing pH** | | | | | | | | |
|---|---|---|---|---|---|---|---|---|---|---|
| | | **3** | **3.25** | **3.50** | **3.75** | **4** | **5** | **6** | **7** | **8** |
| **Particle Size, (nm)** | **(1)** | 220 | 229 | 223 | 235 | 211 | Crea ming | - | - | - |
| | **(2)** | 225 | 228 | 227 | 219 | 220 | Creaming | | | |

### Example 6: Digestion of the SSP in the emulsion with enzyme

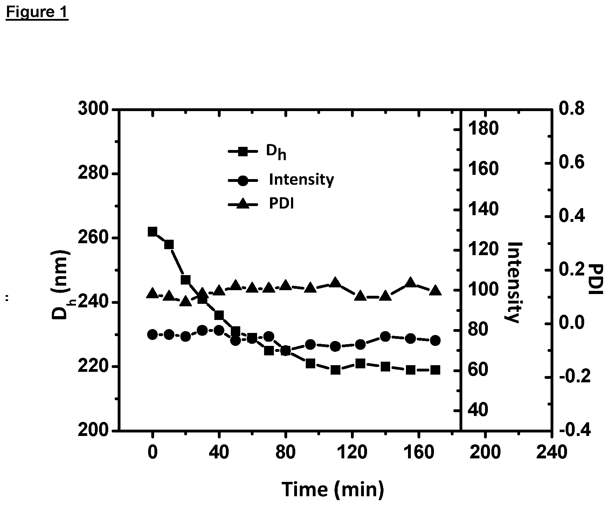

The emulsion was prepared at pH 3.25, protein concentration 5 mg/ml, weight ratio of protein to polysaccharides 1:5, 10 % oil volume fraction, 800 bar homogenization for 2.5 minutes, and heating at 80 °C for 1 h as in example 1. Then, the soy polysaccharide in the emulsion was hydrolyzed by pectinase. For monitoring the size change by real time DLS measurement, the hydrolysis was performed at 25°C and pH 5.0 to reduce the hydrolysis rate. During the DLS measurement, a 3 µL of 0.5% pectinase solution was added into a polystyrene cuvette containing diluted emulsion which was prepared by diluting 5 µL of original emulsion with 3 mL of pH 5.0 aqueous solution. Then, the droplet size was measured every 10 min for the first 80 min, and every 15 min for another 90 min. The data as shown (Figure 1) reveal that droplet size decreases from 262 nm to 219 nm and levels off. From the decrease of the Dₕ value before and after the digestion, we can estimate that the polysaccharide layer of the droplets is about 22 nm.

### Example 7: Solubility of pea protein in aqueous solution

Pea protein ((Pisane® F9) from CosucroSA Belgium) was dissolved in water with an apparent concentration of 22 mg/mL. The solution was adjusted to pH 1 to 10 with NaOH or HCl solution. After equilibrium overnight, the solutions were centrifuged at 5000 rpm or 7800 rpm for 30 min. The supernatants were lyophilized and then the powders were weighed to estimate the solubility of pea protein in different pH. The data is shown in Table 7.

**Table 7: Solubility of pea protein in the pH range of 1 to 10. The original concentration of pea protein was 22 mg/mL.**

| **pH** | **Protein concentration of supernatant (mg/mL)** | |
|---|---|---|
| | **Centrifugation at 7800 rpm** | **Centrifugation at 5000 rpm** |
| 1 | 13.2 | 19.2 |
| 2 | 13.8 | 19.8 |
| 3 | 5.0 | 16.0 |
| 4 | 2.4 | 2.4 |
| 5 | 2.4 | 2.2 |
| 6 | 3.4 | 3.8 |
| 6.8 | - | 16.0±0.9^{a} |
| 7 | 12.8 | 17.8 |
| 8 | 12.4 | 18.8 |
| 9 | 12.8 | 18.5 |
| 10 | 13.9 | 19.4 |

| | | |
|---|---|---|
| ^{a} The original pH of the protein aqueous solution is 6.8; the datum represents a mean value (n = 6). | | |

Table 7 shows that the protein concentrations are about 2 mg/mL at pH 4 and 5, where is close to the isoelectric point of pea protein. At pH 1-3 and 7-10, after centrifugation at 5000 rpm, the protein concentrations are about 40% higher than those after centrifugation at 7800 rpm. This result indicates that the major part of the protein is dispersible aggregates. The solubility of pea protein at pH 3.0 and 4.0 is much smaller than acid soluble soy protein, which remains 20 mg/mL after 10000 rpm centrifugation at pH 3.0 and 4.0 for 23 mg/mL of original solution.

We further prepared pea protein solution of 50 mg/mL, then, changed the pH to 3.0 and 3.25 to investigate the solubility. The data in Table 8 reveal that at pH 3.25, after centrifugation at 5000 rpm for 30 min, about 67% of the protein aggregates were removed.

**Table 8: Solubility of pea protein at pH 3.0 and 3.25 solution. The original protein concentration was 50 mg/mL. The protein solution was adjusted to pH 3.0 or 3.25 then centrifugation for 30 min.**

| **pH** | **Protein concentration (mg/mL)** | |
|---|---|---|
| | **Centrifugation at 7800 rpm** | **Centrifugation at 5000 rpm** |
| 3.0 | 18.2 | 19.2 |
| 3.25 | 15.2 | 16.3 |

### Example 8: ζ-potentials of pea protein solution

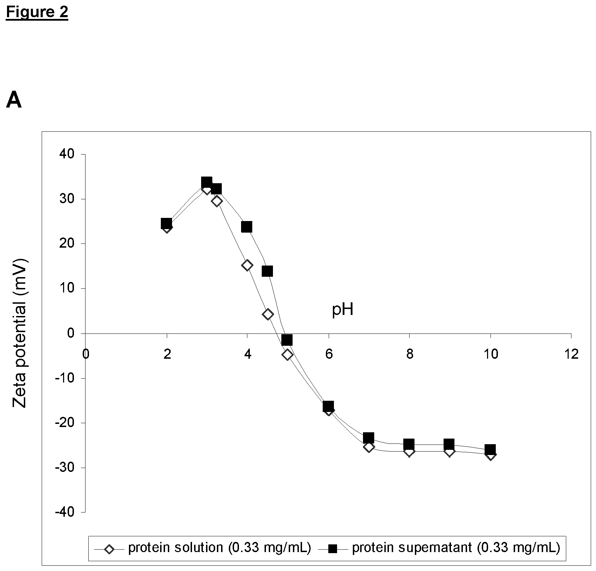

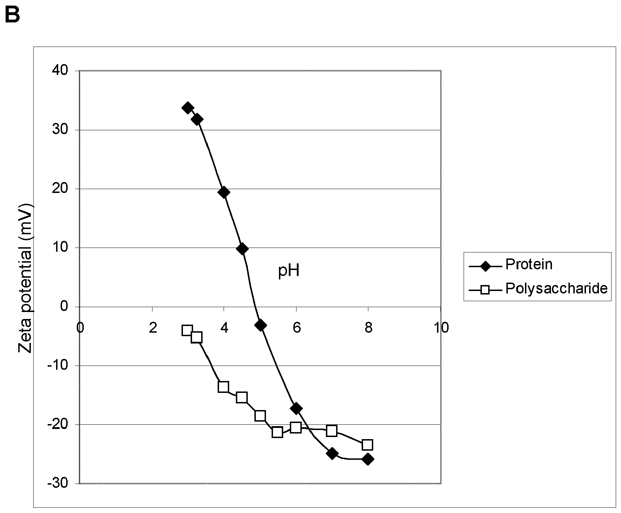

The ζ-potentials of pea protein solution before and after centrifugation at 5000 rpm are not significantly different (Figure 2A). Figure 2B shows the ζ-potentials of pea protein and soy polysaccharide solutions. The zero ζ-potential of pea protein is about pH 4.8. Pea protein and soy polysaccharide carries opposite charges in the pH range of 3.0 to 4.8, in this pH range, pea protein and soy polysaccharide can form electrostatic complexes.

### Example 9: Pea protein/soy polysaccharide complex emulsions prepared from pea protein solution without centrifugation

The polysaccharide stock solution of pH 3.25 was diluted with the same pH aqueous solution followed by 0.5 h stirring. Then, pH 3.25 pea protein stock solution (without centrifugation) was added. The final protein concentration in the mixed solution was 5 mg/mL, the weight ratio of protein to polysaccharide (WR) was 1:5. After the mixed aqueous solution was stirred for 3.5 h, soybean oil was added to reach a volume fraction of 10%. The mixture was pre-emulsified using a homogenizer (FJ200-S, Shanghai Specimen Model Co.) at 10000 rpm for 1 minute, and was immediately emulsified using a high pressure homogenizer (AH100D, ATS Engineering Inc.) at 850 bar for 4 min, followed by a heat treatment at 80 °C for 1 h. After overnight storage at 4 °C, the resultant emulsions were adjusted to different pH values and NaCl was added. The emulsions containing designed pH value and NaCl concentration were stored at 4 °C to investigate the stability. The dynamic light scattering (DLS) result of the emulsions is shown in Table 9. After 26 days of storage, the emulsions were homogeneous. After further storage, the emulsions in the media containing 0.2 M NaCl presented creaming. The emulsions in pH 5 and 6 media without salt presented a little whey layer at the bottom. The whey layer is less than 10% compared to the whole emulsion volume after 180 days of storage.

**Table 9: DLS result of the complex emulsions prepared at pH 3.25 from pea protein without centrifugation at start of experiment and after 26 days storage. The emulsion was heated at 80 °C for 1 h. The experiment was repeated with two different batches labelled (1) and (2) to assess reproducibility of the data.**

| **Sample** | | **Intensity** | **Dₕ (nm)** | **PDI** |
|---|---|---|---|---|
| pH3.25 (emulsifying pH) | **(1)** | 40 | 284 | 0.14 |
| | **(2)** | 36 | 280 | 0.21 |
| pH5 | **(1)** | 37 | 319 | 0.25 |
| | **(2)** | 40 | 309 | 0.27 |
| pH6 | **(1)** | 38 | 321 | 0.26 |
| | **(2)** | 43 | 306 | 0.23 |
| pH5+0.2M NaCl | **(1)** | 36 | 312 | 0.27 |
| | **(2)** | 37 | 325 | 0.29 |
| pH6+0.2M NaCl | **(1)** | 36 | 316 | 0.26 |
| | **(2)** | 32 | 322 | 0.27 |

| **After 26 days' storage:** | | | | |
|---|---|---|---|---|
| **Storage condition** | | **Intensity** | **Dₕ (nm)** | **PDI** |
| pH3.25 (emulsifying pH) | **(1)** | 55 | 275 | 0.13 |
| | **(2)** | 52 | 264 | 0.10 |
| pH5 | **(1)** | 57 | 320 | 0.19 |
| | **(2)** | 55 | 315 | 0.22 |
| pH6 | **(1)** | 55 | 353 | 0.20 |
| | **(2)** | 41 | 341 | 0.16 |
| pH5+0.2M NaCl | **(1)** | 33 | 379 | 0.22 |
| | **(2)** | 32 | 361 | 0.22 |
| pH6+0.2M NaCl | **(1)** | 39 | 414 | 0.28 |
| | **(2)** | 39 | 380 | 0.20 |

We changed the heating temperature to 90 °C for 1 h in order to make the oil-water interfacial films more stable. The other emulsifying condition is the same as described above. After emulsifying and heating at pH 3.25, the emulsion was changed to pH 4, 5, 6, and NaCl was added to investigate the stability. After 94 days of storage in the pH range of 3.25 to 6, the emulsions were homogenous in appearance and the droplet sizes are smaller than 350 nm (Table 10). For the emulsions stored in the salt media for 94 days, creaming appeared. This result demonstrates that the emulsions are stable in the pH range of 3.25 to 6 that can be used in saltless beverages. In the following study the emulsions were heated at 90 °C for 1 h.

Besides emulsifying at pH 3.25, the emulsifying was also performed at pH 3.0, 3.5, 3.75, and 4.0. The resultant emulsions produced at the pH range of 3.5 to 4.0 are not stable because of the lower solubility of the pea protein in this pH range. The emulsion produced at pH 3.0 is not as stable as pH 3.25.

**Table 10: DLS result of the complex emulsions prepared at pH 3.25 from pea protein without centrifugation. The emulsion was heated at 90 °C for 1 h. Results are shown for freshly prepared material and after 94 days.**

| **Sample** | **Storage condition** | **Intensity** | **Dₕ (nm)** | **PDI** |
|---|---|---|---|---|
| pH 3.25 (emulsifying pH) | Freshly prepared | 58 | 265 | 0.15 |
| | After 94 days | 29 | 257 | 0.15 |
| pH 4 | Freshly prepared | 59 | 260 | 0.18 |
| | After 94 days | 25 | 241 | 0.16 |
| pH 5 | Freshly prepared | 53 | 273 | 0.16 |
| | After 94 days | 28 | 289 | 0.09 |
| pH 6 | Freshly prepared | 58 | 309 | 0.18 |
| | After 94 days | 28 | 335 | 0.10 |
| pH 4 + 0.2M NaCl | Freshly prepared | 46 | 286 | 0.20 |
| | After 94 days | Creaming | | |
| pH 5 + 0.2M NaCl | Freshly prepared | 46 | 313 | 0.20 |
| | After 94 days | Creaming | | |
| pH 6 + 0.2M NaCl | Freshly prepared | 41 | 320 | 0.21 |
| | After 94 days | Creaming | | |

### Example 10: Pea protein/soy polysaccharide complex emulsions prepared from pea protein solution centrifuged at pH 3.25

In order to produce stable emulsion in salt medium, we then produced emulsions from protein solution that had been centrifuged at pH 3.25 to remove indiscerptible aggregates. The final protein concentration in aqueous solution is approximately 4 mg/mL, and the polysaccharide was 25 mg/mL. The other condition is the same as above. The droplet sizes of the resultant emulsions are shown in Table 11. The emulsions were homogenous after 87 days of storage in pH 5 and 6 with and without 0.2 M NaCl; the droplet size (Dₕ) does not change significantly after the storage in different media.

**Table 11: DLS results of the complex emulsions prepared at pH 3.25 from two given samples. Samples were measured freshly prepared and after 87 days storage.**

| **Sample** | **Storage** | **Sample 1^{a}** | | | **Sample 2^{b}** | | |
|---|---|---|---|---|---|---|---|
| | | Intensity | Dₕ (nm) | PDI | Intensity | Dₕ (nm) | PDI |
| pH 3.25 (emulsifying pH) | Fresh | 58±7 | 260±3 | 0.12±0.02 | 47±7 | 269±0 | 0.17±0.02 |
| | 87 days | 35±3 | 287±1 | 0.18±0.02 | 33±2 | 294±1 | 0.19±0.01 |
| pH 5 | Fresh | 46±12 | 258±1 | 0.16±0.06 | 54±8 | 266±5 | 0.17±0.01 |
| | 87 days | 33±2 | 289±9 | 0.13±0.07 | 31±2 | 303±6 | 0.16±0.01 |
| pH 6 | Fresh | 46±13 | 296±3 | 0.12±0.01 | 52±6 | 300±3 | 0.14±0.01 |
| | 87 days | 29±1 | 290±2 | 0.22±0.02 | 31±3 | 324±9 | 0.18±0.01 |
| pH5+0.2M NaCl | Fresh | 38±2 | 276±0 | 0.16±0.03 | 34±0 | 276±4 | 0.16±0.02 |
| | 87 days | 22±0 | 262±11 | 0.28±0.02 | 27±2 | 277±5 | 0.17±0.02 |
| pH6+0.2M NaCl | Fresh | 42±5 | 278±5 | 0.17±0.04 | 38±3 | 280±5 | 0.17±0.02 |
| | 87 days | 21±1 | 271±16 | 0.25±0.05 | 28±0 | 311±3 | 0.21±0.01 |

| | | | | | | | |
|---|---|---|---|---|---|---|---|
| ^{a} The protein stock solution with a concentration of 50 mg/mL was adjusted to pH 3.25 then centrifugation at 5000 rpm for 30 min. ^{b} The centrifugation was carried out at 7800 rpm instead of 5000 rpm. | | | | | | | |

### Example 11: Pea protein/soy polysaccharide complex emulsions prepared from pea protein solution centrifuged at pH 6.8.

In order to increase the utilization rate of the pea protein and also obtain stable emulsion in salt medium, we changed centrifugation pH. The original pea protein solution is pH 6.8, and original soy polysaccharide solution is pH 5.3. We centrifuged the protein solution at pH 6.8, at this pH the protein utilization rate is about 73%. Then we mixed the protein solution with soy polysaccharide solution which was pH 5.3 (without pH adjusting), or mixed them at pH 7.0 (with pH adjusting). The protein/polysaccharide mixture was further adjusted to pH 3.75. Table 12 shows no precipitates at pH 3.75, indicating the polysaccharide can protect the protein from precipitation. The mixture mixed at pH 7.0 then changed to pH 3.75 has smaller particle size and larger intensity, indicating a better complexation between the protein and polysaccharide. When mixing at pH 5.3, the protein aggregates can inhibit the protein binding with the polysaccharide. The mixtures in Table 12 were used to produce emulsions at pH 3.25; the droplet size is shown in Table 13. As the pea protein/soy polysaccharide complex solution mixed at pH 7.0 produced smaller droplets, we adopted the following condition to produce emulsions in the following study: pea protein solution of pH 6.8 was centrifuged at 5000 rpm for 30 min, the pH of the resultant supernatant and the pH of soy polysaccharide solution were adjusted to pH 7.0, respectively, followed by mixing the protein and polysaccharide solutions at pH 7.0, then changing the mixture to emulsifying pH.

**Table 12: DLS results of complex solution at pH 3.75. The protein solution was centrifuged at pH 6.8. The protein and polysaccharide solutions were mixed at different pH.**

| **Sample** | **Protein concentration (mg/mL)^{a}** | **Polysaccharide concentration (mg/mL)^{a}** | **WR^{b}** | **Intensity** | **Dₕ(nm)** | **PDI** |
|---|---|---|---|---|---|---|
| Mixture - adjusted^{c} | 5 | 25 | 1:5 | 152±12 | 759±57 | 1.00 |
| Mixture - unadjusted^{d} | | | | 139±16 | 1460±51 | 1.00 |

| | | | | | | |
|---|---|---|---|---|---|---|
| ^{a} The concentration of DLS samples. ^{b} The weight ratio of protein to polysaccharide. ^{c} Both the protein and polysaccharide solutions were adjusted to pH 7.0 before mixing. ^{d} The pH was unadjusted before mixing. | | | | | | |

**Table 13: DLS results of the emulsions prepared at pH 3.25 from the mixtures shown in Table 12.**

| **Emulsified pH** | **Sample** | **Intensity** | **Dₕ (nm)** | **PDI** |
|---|---|---|---|---|
| 3.25 | Adjusted | 29±3 | 301±9 | 0.20±0.02 |
| | Unadjusted | 28±2 | 319±10 | 0.22±0.05 |

We further investigated the complex solution with different weight ratios of pea protein to soy polysaccharide (WR). The data in Table 14 further support that the complexation can destroy the aggregates of individual protein and individual polysaccharide, forming smaller complex particles.

**Table 14: DLS results of protein, polysaccharide and protein/polysaccharide complex solutions at pH 3.75. Both the protein and polysaccharide solutions were adjusted to pH 7.0 before mixing; then the mixture was changed to pH 3.75.**

| **Sample** | **Protein concentration (mg/mL)** | **Polysaccharide concentration (mg/mL)** | **Intensity** | **Dₕ(nm)** | **PDI** |
|---|---|---|---|---|---|
| protein | 5 | 0 | 126±3 | 1122±48 | 0.52±0.48 |
| polysaccharide | 0 | 25 | 30±5 | 704±2 | 1.00 |
| WR 2:1 | 5 | 2.5 | 145±12 | 178±2 | 0.60±0.01 |
| WR 1:1 | 5 | 5 | 146±16 | 190±7 | 0.59±0.08 |
| WR 1:2 | 5 | 10 | 136±21 | 334±59 | 0.81±0.08 |
| WR 1:3 | 5 | 15 | 130±9 | 397±42 | 0.62±0.10 |
| WR 1:4 | 5 | 20 | 127±8 | 590±129 | 0.92±0.04 |
| WR 1:5 | 5 | 25 | 121±9 | 741±137 | 0.82±0.18 |
| WR 1:6 | 5 | 30 | 134±17 | 928±110 | 0.92±0.08 |

### Example 12: Pea protein/soy polysaccharide complex emulsions prepared from pea protein solution centrifuged at pH 6.8. The pea protein and soy polysaccharide solutions were adjusted to pH 7.0 before mixing.

In the following study, the producing procedure of the emulsions is as follows. Pea protein aqueous solution (pH 6.8) was centrifuged at 5000 rpm for 30 min. Pea protein and soy polysaccharide solutions were adjusted to pH 7.0, respectively, then were mixed and stirred for 2 h. The mixture was further adjusted to emulsifying pH. After stirring for another 4 h, soybean oil was added to 10% volume fraction. The mixture was pre-emulsified using a homogenizer at 10000 rpm for 1 minute, and was immediately emulsified using a high pressure homogenizer at 800 bar for 3 min, followed by a heat treatment at 90 °C for 1 h. After overnight storage at 4 °C, the resultant emulsions were adjusted to different pH values and NaCl was added. The emulsions containing designed pH value and NaCl concentration were stored at 4 °C to investigate the stability.

### (1) Influence of emulsifying pH

The complex emulsions were produced in the pH range of 2.5 to 7. DLS results (Table 15) indicate that the emulsions produced at the pH range of 3.5 to 4.25 are stable at pH 5 and 6 media with 0.2 M NaCl; the emulsions were homogenous after the storage. At the pH range of 3.5 to 4.25, the electrostatic attraction is stronger between the protein and polysaccharide as shown in Figure 2 that benefits the complexation. In the following study, we used pH 3.75 as the emulsifying pH.

**Table 15: Droplet sizes of the complex emulsions produced at different pHs. The protein concentration was 5 mg/mL and WR was 1:5 in aqueous solution. Measurements were performed on freshly prepared material, and depending on the batches after 29, 37, or 52 days (d) storage.**

| **Emulsifying pH** | **Storage** | **As prepared** | **pH 5** | **pH 6** | **pH 5 + 0.2M NaCl** | **pH 6 + 0.2M NaCl** |
|---|---|---|---|---|---|---|
| 2.50 | fresh | 732±31 | 2372±192 | 2042±35 | 4686±373 | 3995±353 |
| 3.00 | fresh | 328±6 | 331±10 | 347±6 | 818±109 | 662±2 |
| | 37d | 305 | 336 | 293 | 337 | 536 |
| | 52 d | 301 | 288 | 375 | 534 | 463 |
| 3.25 | fresh | 299±13 | 298±13 | 324±10 | 465±54 | 442±49 |
| | 37d | 265 | 279 | 306 | 337 | 395 |
| | 52 d | 289 | 312 | 363 | 369 | 452 |
| 3.50 | fresh | 302±18 | 299±4 | 321±5 | 383±3 | 375±3 |
| | 37d | 264 | 308 | 300 | 330 | 389 |
| | 52 d | 291 | 308 | 359 | 411 | 429 |
| 3.75 | fresh | 292±17 | 295±11 | 314±5 | 333±9 | 346±19 |
| | 37d | 253 | 262 | 266 | 268 | 292 |
| | 52 d | 286 | 310 | 367 | 370 | 399 |
| 4.00 | fresh | 291±15 | 309±7 | 328±15 | 360±25 | 348±9 |
| | 37d | 245 | 270 | 284 | 270 | 318 |
| | 52 d | 300 | 327 | 382 | 403 | 437 |
| 4.25 | fresh | 288±3 | 300±1 | 321±5 | 350±1 | 352±3 |
| | 37d (1) | 268 | 281 | 313 | 345 | 422 |
| | 37 d (2) | 266 | 288 | 337 | 347 | 387 |
| 4.50 | fresh | 306±8 | 326±9 | 354±8 | 473±20 | 448±18 |
| | 37d (1) | 316 | 320 | 356 | 534 | 613 |
| | 37 d (2) | 303 | 291 | 322 | 501 | 532 |
| 5.00 | fresh | 555±13 | 566±6 | 597±13 | 1156±15 | 950±0 |
| | 29 d (1) | 595 | 523 | 558 | Creaming | |
| | 29 d (2) | 621 | 600 | 501 | Creaming | |
| 6.00 | fresh | Creaming | - | | | |
| 7.00 | fresh | | | | | |

### (2) Influence of the weight ratio of pea protein to soy polysaccharide (WR)

Fixing the protein concentration at 5 mg/mL and changing the polysaccharide concentration from 2.5 to 30 mg/mL, i.e., changing WR from 2:1 to 1:6. Table 16 indicates that when WR in the range of 1:2 to 1:6, the droplet size is not influenced by the environment significantly, suggesting the oil droplets have been covered by enough polysaccharide. We chose WR 1:4 and 1:5 for further study.

**Table 16: DLS result of the complex emulsions produced at pH 3.75 with different WR. The protein concentration was 5 mg/mL.**

| **Sample** | **As prepared (pH3.75)** | | | **Adjusted to pH 5** | | |
|---|---|---|---|---|---|---|
| | **Intensity** | **Dₕ (nm)** | **PDI** | **Intensity** | **Dₕ (nm)** | **PDI** |
| WR2:1 | 16±2 | 567±9 | 0.54±0.01 | 22±2 | 624±49 | 0.38±0.23 |
| WR1:1 | 34±8 | 367±27 | 0.23±0.01 | 38±2 | 350±10 | 0.15±0.10 |
| WR1:2 | 53±4 | 292±11 | 0.12±0.01 | 48±1 | 279±3 | 0.14±0.01 |
| WR1:3 | 48±8 | 284±12 | 0.13±0.03 | 48±2 | 282±5 | 0.14±0.02 |
| WR1:4 | 48±4 | 280±13 | 0.12±0.01 | 50±4 | 284±2 | 0.15±0.07 |
| WR1:5 | 52±8 | 288±12 | 0.15±0.01 | 52±4 | 296±4 | 0.15±0.03 |
| WR1:6 | 57±3 | 281±11 | 0.14±0.05 | 52±3 | 298±6 | 0.14±0.03 |

| **Sample** | **Adjusted to pH 6** | | | **Adjusted to pH 5 + 0.2M NaCl** | | |
|---|---|---|---|---|---|---|
| | **Intensity** | **Dₕ (nm)** | **PDI** | **Intensity** | **Dₕ (nm)** | **PDI** |
| WR2:1 | 19±1 | 618±24 | 0.64±0.02 | 19±3 | 2816±344 | 1.00±0 |
| WR1:1 | 36±1 | 342±14 | 0.20±0.08 | 26±2 | 1522±689 | 0.62±0.38 |
| WR1:2 | 49±1 | 284±1 | 0.09±0.07 | 40±2 | 358±15 | 0.13±0.08 |
| WR1:3 | 51±3 | 301±9 | 0.12±0.05 | 44±4 | 331±9 | 0.10±0.03 |
| WR1:4 | 49±1 | 312±14 | 0.12±0.06 | 43±2 | 326±14 | 0.12±0.07 |
| WR1:5 | 46±1 | 323±6 | 0.09±0.07 | 44±2 | 322±8 | 0.10±0.08 |
| WR1:6 | 54±5 | 329±14 | 0.12±0.04 | 45±2 | 310±10 | 0.14±0.07 |

| **Sample** | **Adjusted to pH 6 + 0.2M NaCl** | | | | | |
|---|---|---|---|---|---|---|
| | **Intensity** | **Dₕ (nm)** | **PDI** | | | |
| WR2:1 | 14±1 | 1538±369 | 0.70±0.30 | | | |
| WR1:1 | 26±1 | 850±251 | 58±0.42 | | | |
| WR1:2 | 42±2 | 354±9 | 0.13±0.08 | | | |
| WR1:3 | 40±2 | 338±13 | 0.12±0.02 | | | |
| WR1:4 | 43±0 | 335±18 | 0.14±0.05 | | | |
| WR1:5 | 38±2 | 331±11 | 0.15±0.08 | | | |
| WR1:6 | 45±3 | 331±15 | 0.12±0.05 | | | |

### (3) Influence of high pressure homogenization (HPH)

We changed homogenization pressure from 800 to 1200 bar. The data in Table 17 demonstrate the pressure does not have significant influence on the droplet size and stability of the emulsions. In the following study, we fixed HPH condition at 800 bar for 3 min.

**Table 17: DLS result of the complex emulsions produced at pH 3.75 with different HPH condition. The protein concentration was 5 mg/mL.**

| **Sample^{a}** | **WR** | **pH3.75 (As prepared)** | | | **Adjusted to pH 5** | | |
|---|---|---|---|---|---|---|---|
| | | **Intensity** | **Dₕ (nm)** | **PDI** | **Intensity** | **Dₕ (nm)** | **PDI** |
| 800-3 | 1:4 | 47±3 | 265±1 | 0.14±0.03 | 38±8 | 278±13 | 0.17±0.02 |
| | 1:5 | 45±2 | 281±3 | 0.17±0.03 | 30±8 | 295±3 | 0.16±0.03 |
| 1000-3 | 1:4 | 52±11 | 270±6 | 0.16±0.01 | 40±4 | 280±0 | 0.16±0.02 |
| | 1:5 | 51±1 | 275±4 | 0.12±0.04 | 34±2 | 287±1 | 0.15±0.05 |
| 1200-3 | 1:4 | 44±12 | 258±1 | 0.12±0.04 | 48±8 | 264±4 | 0.16±0.04 |
| | 1:5 | 56±2 | 266±3 | 0.13±0.03 | 38±10 | 275±0 | 0.16±0.02 |

| **Sample^{a}** | **WR** | **Adjusted to pH 6** | | | **Adjusted to pH 5 + 0.2M NaCl** | | |
|---|---|---|---|---|---|---|---|
| | | **Intensity** | **Dₕ (nm)** | **PDI** | **Intensity** | **Dₕ (nm)** | **PDI** |
| 800-3 | 1:4 | 42±8 | 283±5 | 0.14±0.05 | 40±6 | 311±14 | 0.20±0.02 |
| | 1:5 | 28±9 | 311±3 | 0.21±0.07 | 37±5 | 315±3 | 0.19±0.02 |
| 1000-3 | 1:4 | 36±5 | 299±2 | 0.18±0.05 | 38±2 | 306±1 | 0.16±0.02 |
| | 1:5 | 40±7 | 306±13 | 0.19±0.02 | 40±2 | 308±2 | 0.12±0.01 |
| 1200-3 | 1:4 | 48±8 | 272±5 | 0.12±0.03 | 37±5 | 302±7 | 0.18±0.01 |
| | 1:5 | 38±14 | 282±18 | 0.16±0.02 | 40±10 | 292±2 | 0.16±0.02 |

| **Sample^{a}** | **WR** | **Adjusted to pH 6 + 0.2M NaCl** | | | | | |
|---|---|---|---|---|---|---|---|
| | | **Intensity** | **Dₕ (nm)** | **PDI** | | | |
| 800-3 | 1:4 | 44±6 | 314±13 | 0.18±0.02 | | | |
| | 1:5 | 38±8 | 332±10 | 0.22±0.03 | | | |
| 1000-3 | 1:4 | 40±4 | 312±2 | 0.19±0.04 | | | |
| | 1:5 | 34±2 | 321±2 | 0.18±0.01 | | | |
| 1200-3 | 1:4 | 42±4 | 298±10 | 0.14±0.02 | | | |
| | 1:5 | 42±1 | 305±0 | 0.18±0.03 | | | |

| | | | | | | | |
|---|---|---|---|---|---|---|---|
| ^{a} Samples prepared by different HPH conditions. The figures represent the value of pressure intensity and the duration of HPH process. For instance, 800-3 indicates that the sample was homogenized at 800 bar for 3 min. | | | | | | | |

### (4) Influence of heat treatment

The emulsion produced at pH 3.75, 800 bar for 3 min from WR 1:4 complexes with a protein concentration of 5 mg/mL was divided into 2 parts. One was heated at 90 °C for 1h, the other was not. Then, the emulsions were changed to pH 2 to 8 and 0.2 M NaCl was added. The data in Table 18 indicate that the heated emulsions are stable against pH and salt concentration changes. Heating can induce protein denaturation and form irreversible oil-water interfacial films composed of pea protein and soy polysaccharide. During the storage in different media, the unheated emulsions presented creaming in all the media containing salt, and also creaming in pH 7 and 8 media without salt. On the contrary, the heated emulsions are homogenous in all the media with and without salt. Table 18 also shows that the unheated emulsions are stable in the pH range of 3 to 5, the emulsions are homogenous, and the droplet sizes do not change after the storage. This result suggests that the unheated emulsion can encapsulate heat-sensitive lipophilic bioactive compounds and the emulsion can be used in saltless beverages.

**Table 18: DLS results of the complex emulsions prepared at pH 3.75, 800 bar for 3 min from WR 1:4 complexes with a protein concentration of 5 mg/mL. The heating was performed at 90 °C for 1 h. Measurements were performed on freshly prepared material and after 92 days storage.**

| | | **Unheated emulsions** | | | **Heated emulsions** | | |
|---|---|---|---|---|---|---|---|
| **Adjusted pH** | **Storage** | **Inten sity** | **Dₕ (nm)** | **PDI** | **Inten sity** | **Dₕ (nm)** | **PDI** |
| pH2 | fresh | 30±3 | 390±12 | 0.30±0.04 | 30±4 | 312±12 | 0.22±0.02 |
| | 92 days | Creaming | | | - | - | - |
| | 99 days | - | - | - | 41±1 | 362±3 | 0.26±0.01 |
| pH3 | fresh | 38±2 | 271±4 | 0.11 ±0.03 | 37±5 | 282±6 | 0.17±0.02 |
| | 92 days | 54±1 | 289±2 | 0.11±0 | - | - | - |
| | 99 days | - | - | - | 49±1 | 280±4 | 0.15±0.01 |
| pH4 | fresh | 38±4 | 270±8 | 0.17±0 | 38±3 | 274±4 | 0.18±0.06 |
| | 92 days | 50±5 | 304±6 | 0.17±0.02 | - | - | - |
| | 99 days | - | - | - | 49±1 | 279±1 | 0.17±0.01 |
| pH5 | fresh | 38±4 | 280±3 | 0.16±0.01 | 36±1 | 280±8 | 0.23±0.01 |
| | 92 days | 44±1 | 327±14 | 0.13±0.01 | - | - | - |
| | 99 days | - | - | - | 50±1 | 301±2 | 0.20±0 |
| pH6 | fresh | 28±3 | 364±8 | 0.27±0.10 | 37±1 | 320±25 | 0.26±0.08 |
| | 92 days | Creaming | | | - | - | - |
| | 99 days | - | - | - | 45±1 | 323±1 | 0.15±0.07 |
| pH7 | fresh | 24±1 | 495±41 | 0.26±0.03 | 34±2 | 316±14 | 0.17±0.01 |
| | 92 days | Creaming | | | - | - | - |
| | 99 days | - | - | - | 50±3 | 351±2 | 0.21±0.02 |
| pH8 | fresh | 22±6 | 514±26 | 0.47±0.07 | 38±1 | 326±10 | 0.17±0.02 |
| | 92 days | Creaming | | | - | - | - |
| | 99 days | - | - | - | 37±3 | 573±8 | 0.24±0.05 |
| pH2+0.2 M NaCl | fresh | 19±0 | 1036±1 52 | 1.00±0 | 24±2 | 342±3 | 0.24±0.02 |
| | 92 days | Creaming | | | - | - | - |
| | 99 days | - | - | - | 38±1 | 400±42 1 | 0.18±0.02 |
| pH3+0.2 M NaCl | fresh | 26±2 | 342±12 | 0.20±0.08 | 28±1 | 312±6 | 0.21±0 |
| | 92 days | Creaming | | | - | - | - |
| | 99 days | - | - | - | 34±3 | 344±31 | 0.17±0.05 |
| pH4+0.2 M NaCl | fresh | 30±1 | 297±1 | 0.20±0.04 | 30±0 | 293±1 | 0.15±0.01 |
| | 92 days | Creaming | | | - | - | - |
| | 99 days | - | - | - | 37±1 | 338±3 | 0.17±0.01 |
| pH5+0.2 M NaCl | fresh | 21±2 | 479±28 | 0.41±0.07 | 26±0 | 316±6 | 0.20±0.05 |
| | 92 days | Creaming | | | - | - | - |
| | 99 days | - | - | - | 35±2 | 355±1 | 0.13±0 |
| pH6+0.2 M NaCl | fresh | 20±2 | 740±70 | 0.74±0.26 | 26±2 | 320±1 | 0.25±0.04 |
| | 92 days | Creaming | | | - | - | - |
| | 99 days | - | - | - | 38±2 | 364±5 | 0.16±0.04 |
| pH7+0.2 M NaCl | fresh | 20±0 | 692±24 | 0.62±0.04 | 28±2 | 323±8 | 0.20±0.07 |
| | 92 days | Creaming | | | - | - | - |
| | 99 days | - | - | - | 34±0 | 343±11 | 0.17±0 |
| pH8+0.2 M NaCl | fresh | 15±0 | 680±44 | 0.96±0.04 | 29±0 | 336±2 | 0.19±0.01 |
| | 92 days | Creaming | | | - | - | - |
| | 99 days | - | - | - | Creaming | | |

### Example 13: Pea protein/soy polysaccharide complex emulsions prepared from pea protein solution without centrifugation. The pea protein and soy polysaccharide solutions were adjusted to pH 7.0 before mixing.

### 1) emulsions prepared from the pea protein solution without centrifugation.

Pea protein and soy polysaccharide solutions were adjusted to pH 7.0, respectively, then were mixed and stirred for 2 h. The protein concentration was 5 mg/mL and WR was 1:4. The mixture was further adjusted to emulsifying pH. After stirring for another 4 h, soybean oil was added to 10% volume fraction. The mixture was pre-emulsified using a homogenizer at 10000 rpm for 1 minute, and was immediately emulsified using a high pressure homogenizer at 800 bar for 4 min, followed by a heat treatment at 90 °C for 1 h. After overnight storage at 4 °C, the resultant emulsions were adjusted to different pH values and NaCl was added. The emulsions containing designed pH value and NaCl concentration were stored at 4 °C to investigate the stability (Table 19). We further investigated the stability of the emulsions produced at pH 3.5 and 3.75 in different media (Table 20). The data in Table 19 and 20 indicate the emulsions prepared from uncentrifugated pea protein solution are also stable against pH and salt concentration changes.

**Table 19: Droplet size of the complex emulsions prepared from the pea protein solution without centrifugation.**

| **Emulsifying pH** | **As prepared** | **pH 5** | **pH 6** | **pH 5 + 0.2M NaCl** | **pH 6 + 0.2M NaCl** |
|---|---|---|---|---|---|
| 3.0 | 261 | 300 | 309 | 381 | 349 |
| 3.25 | 265 | 301 | 306 | 349 | 345 |
| 3.5 | 263 | 294 | 305 | 320 | 305 |
| 3.75 | 236 | 319 | 327 | 328 | 323 |
| 4.0 | 245 | 316 | 320 | 345 | 329 |

**Table 20: DLS results of the complex emulsions prepared at pH 3.5 from the pea protein solution without centrifugation. Heated emulsion:**

| **Storage condition** | **Fresh heated emulsion** | | | **After 55 days of storage** | | |
|---|---|---|---|---|---|---|
| | **Intensity** | **Dₕ (nm)** | **PDI** | **Intensity** | **Dₕ (nm)** | **PDI** |
| As prepared (pH 3.5) | 32±2 | 267±6 | 0.16±0.01 | 52±2 | 278±3 | 0.11±0.01 |
| pH2 | 28±2 | 326±7 | 0.17±0.03 | 41±1 | 370±6 | 0.22±0.02 |
| pH 3 | 31±1 | 276±4 | 0.13±0.01 | 49±1 | 279±1 | 0.16±0.03 |
| pH 4 | 33±2 | 250±15 | 0.16±0.03 | 48±2 | 282±1 | 0.14±0.01 |
| pH 5 | 31±1 | 300±11 | 0.14±0.04 | 46±1 | 301±3 | 0.14±0.04 |
| pH 6 | 31±1 | 306±3 | 0.18±0.02 | 48±6 | 319±4 | 0.20±0.01 |
| pH 7 | 30±0 | 327±1 | 0.17±0.02 | 41±4 | 323±16 | 0.19±0.01 |
| pH 8 | 27±5 | 311±7 | 0.20±0.01 | 45±4 | 341±6 | 0.21±0.01 |
| pH 2+0.2M NaCl | 27±0 | 322±4 | 0.22±0.01 | 29±3 | 353±13 | 0.17±0.10 |
| pH 3+0.2M NaCl | 29±1 | 291±0 | 0.16±0.02 | 36±1 | 321±13 | 0.15±0.01 |
| pH 4+0.2M NaCl | 30±3 | 280±6 | 0.20±0.03 | 38±10 | 298±13 | 0.11±0.02 |
| pH 5+0.2M NaCl | 27±2 | 300±2 | 0.16±0.01 | 37±11 | 336±16 | 0.15±0.04 |
| pH 6+0.2M NaCl | 29±1 | 300±1 | 0.18±0.01 | 34±7 | 367±12 | 0.21±0 |
| pH 7+0.2M NaCl | 29±1 | 309±8 | 0.20±0.01 | 31±3 | 438±11 | 0.23±0.04 |
| pH 8+0.2M NaCl | 28±0 | 307±3 | 0.17±0.02 | 36±6 | 457±18 | 0.26±0.04 |

| Unheated emulsion: | | | | | | |
|---|---|---|---|---|---|---|
| **Storage condition** | **Fresh unheated emulsion** | | | **After 55 days of storage** | | |
| | **Intensity** | **Dₕ (nm)** | **PDI** | **Intensity** | **Dₕ (nm)** | **PDI** |
| As prepared (pH 3.5) | 32±0 | 255±2 | 0.15±0.01 | 55±1 | 287±3 | 0.14±0.01 |
| pH2 | 20±2 | 529±3 | 0.58±0.05 | | Creaming | |
| pH 3 | 30±2 | 263±4 | 0.16±0.04 | 55±1 | 289±1 | 0.13±0.01 |
| pH 4 | 30±5 | 250±6 | 0.17±0.02 | 54±1 | 296±4 | 0.17±0.01 |
| pH 5 | 27±3 | 303±6 | 0.12±0.05 | 50±0 | 341±4 | 0.21±0.02 |
| pH 6 | 21±3 | 421±24 | 0.22±0.07 | Creaming | | |
| pH 7 | 17±3 | 611±147 | 0.59±0.29 | | | |
| pH 8 | 15±2 | 668±229 | 0.75±0.25 | | | |
| pH 2+0.2M NaCl | 14±1 | 965±110 | 1.0±0 | | | |
| pH 3+0.2M NaCl | 22±4 | 411±54 | 0.23±0.05 | | | |
| pH 4+0.2M NaCl | 26±2 | 304±6 | 0.23±0.01 | | | |
| pH 5+0.2M NaCl | 14±3 | 604±171 | 0.71±0.29 | | | |
| pH 6+0.2M NaCl | 14±3 | 969±400 | 0.79±0.21 | | | |
| pH 7+0.2M NaCl | Creaming | | | | | |
| pH 8+0.2M NaCl | | | | | | |

### 2) Emulsion prepared with 20% and 30% oil volume fraction.

Pea protein solution without centrifugation and soy polysaccharide solution were adjusted to pH 7.0, respectively, then were mixed and stirred for 2 h. The protein concentration was 5 mg/mL and WR was 1:4. The mixture was further adjusted to pH 3.5, and then soybean oil was added to 20% and 30% volume fraction. The mixture was emulsified at 800 bar for 4 min, followed by a heat treatment at 90 °C for 1 h. The data in Table 21 indicate that the droplet size increases with the oil content, so, the stability of the emulsions decreases with the increase of oil content.

### Table 21: DLS results of the emulsions prepared with 20% and 30% oil volume fraction before and after 55 days of storage. The emulsions were heated at 90 °C for 1 h.

**20% oil:**

| **Sample** | | freshly prepared | | | After 55 days storage | | |
|---|---|---|---|---|---|---|---|
| | **Batch** | **Intensity** | **Dₕ (nm)** | **PDI** | **Intensity** | **Dₕ (nm)** | **PDI** |
| As prepared (pH 3.5) | (1) | 60 | 387 | 0.24 | 46 | 424 | 0.28 |
| " | (2) | 61 | 401 | 0.24 | 45 | 387 | 0.14 |
| pH 5 | (1) | 67 | 412 | 0.25 | 43 | 460 | 0.17 |
| " | (2) | 56 | 440 | 0.28 | 50 | 428 | 0.24 |
| pH 6 | (1) | 66 | 427 | 0.28 | 35 | 486 | 0.23 |
| " | (2) | 59 | 446 | 0.33 | 52 | 432 | 0.22 |
| pH 5 + 0.2 M NaCl | (1) | 64 | 405 | 0.23 | 35 | 556 | 0.14 |
| " | (2) | 65 | 470 | 0.27 | 36 | 561 | 0.36 |
| pH 6 + 0.2 M NaCl | (1) | 61 | 462 | 0.26 | 32 | 545 | 0.19 |
| " | (2) | 54 | 488 | 0.28 | 30 | 528 | 0.28 |

| 30% oil: | | | | | | | |
|---|---|---|---|---|---|---|---|
| **Sample** | freshly prepared | | | After 3 days storage | | | |
| | **Intensity** | **Dₕ (nm)** | **PDI** | **Intensity** | | **Dₕ (nm)** | **PDI** |
| As prepared (pH 3.5) | 57 | 576 | 0.28 | Creaming | | | |
| pH 5 | 53 | 621 | 0.29 | | | | |
| pH 6 | 49 | 644 | 0.30 | | | | |
| pH 5 + 0.2 M NaCl | 50 | 678 | 0.37 | | | | |
| pH 6 + 0.2 M NaCl | 42 | 699 | 0.41 | | | | |

### Example 14: Emulsifying ability and stability of individual pea protein

Individual pea protein solution with a concentration of 5 mg/mL was adjusted to pH 3, 4, 5, 6, and 7, followed by emulsification. The emulsions produced at pH 4, 5, and 6 presented creaming immediately after the emulsification. For the emulsion produced at pH 3 and 7, the droplet size is 290 and 358 nm before the heating, 273 and 398 nm after the heating, respectively. The heated and unheated emulsions produced at pH 3 and 7 were changed to pH 2 to 8 and NaCl was added. DLS result showed the droplet sizes increase acutely for fresh prepared samples (data not shown); creaming appeared for all the samples within one week except for the emulsion produced at pH 3.0 without pH change and salt addition.
The result above supports the conclusion that pea protein/soy polysaccharide complex emulsions are superior to individual pea protein and individual soy polysaccharide emulsions.

### Example 15: Encapsulation of β-carotene in the droplets of complex emulsion

β-Carotene was added in soybean oil with a concentration of 1 mg/mL. The oil phase was heated at 70 °C for 2 h under nitrogen atmosphere to dissolve β-carotene. The emulsion was prepared at pH 3.75, 800 bar for 4 min with 10% oil volume fraction, 5 mg/mL pea protein and 20 mg/mL polysaccharide aqueous phase. After emulsification, the β-carotene was encapsulated into the droplets; the β-carotene was 0.1 mg/mL in the emulsion. The resultant emulsion was adjusted to different pH to investigate the stability. Although all the emulsions are homogenous in appearance after 11 days of storage in different pH, DLS result shown in Table 22 ndicates that the encapsulated emulsions are stable in the pH range of 3, 4, and 5, where the droplet sizes do not change significantly.

**Table 22 DLS result of the emulsion encapsulated β-carotene. The emulsion was produced at pH 3.75, and β-carotene concentration was 0.1 mg/mL.**

| **Sample** | **Storage** | **Intensity** | **Dₕ (nm)** | **PDI** |
|---|---|---|---|---|
| pH 3.75 (emulsifying pH) | fresh | 28±2 | 258±1 | 0.15±0.03 |
| | 86 days | 58±1 | 301±4 | 0.12±0.01 |
| pH 2 | fresh | 24±0 | 441±4 | 0.27±0.02 |
| | 86 days | Creaming | | |
| pH 3 | fresh | 36±1 | 272±1 | 0.18±0.01 |
| | 86 days | 56±1 | 296±2 | 0.14±0.02 |
| pH 4 | fresh | 36±1 | 265±1 | 0.18±0.01 |
| | 86 days | 61±3 | 310±5 | 0.16±0.0 |
| pH 5 | fresh | 30±0 | 285±3 | 0.09±0.03 |
| | 86 days | 56±4 | 334±4 | 0.23±0.06 |
| pH 6 | fresh | 25±1 | 365±2 | 0.19±0.01 |
| | 86 days | Creaming | | |
| pH 7 | fresh | 20±1 | 614±4 | 0.38±0.01 |
| | 86 days | Creaming | | |
| pH 8 | fresh | 24±1 | 551±10 | 0.38±0.01 |
| | 86 days | Creaming | | |

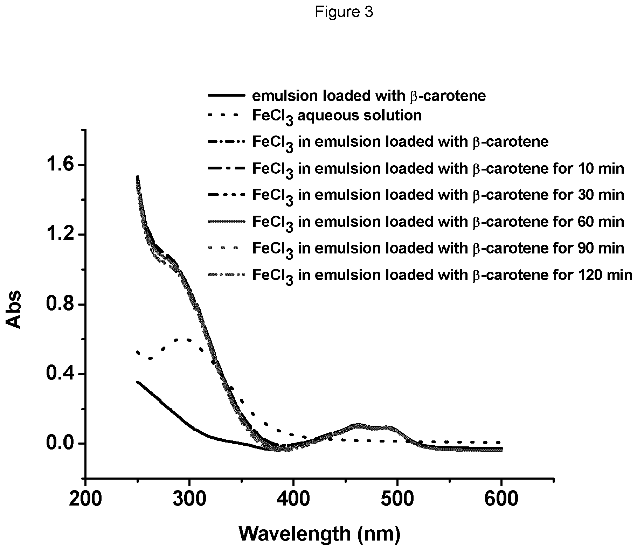

To further demonstrate the stability of the encapsulated β-carotene, the visible spectra of β-carotene emulsions were measured before and after the addition of FeCl₃ (see Figure 3). For this experiment, we incubated the encapsulated material with FeCl₃. An emulsion was prepared by mixing 5 µl beta-carotene emulsion with 3 ml water, to which 20 µl of FeCl₃ at a concentration of 10 mg/ml were added. The final β-carotene concentration was 1.67 × 10⁻³ mg/mL. The blank solution for the measurement contains the same components with the same concentrations but without β-carotene. This experiment showed that the characteristic absorption band of β-carotene emulsion does not change after the addition of FeCl₃ demonstrating that the loaded β-carotene cannot react with FeCl₃, thereby confirming that the emulsion can protect β-carotene from oxidation during the storage.

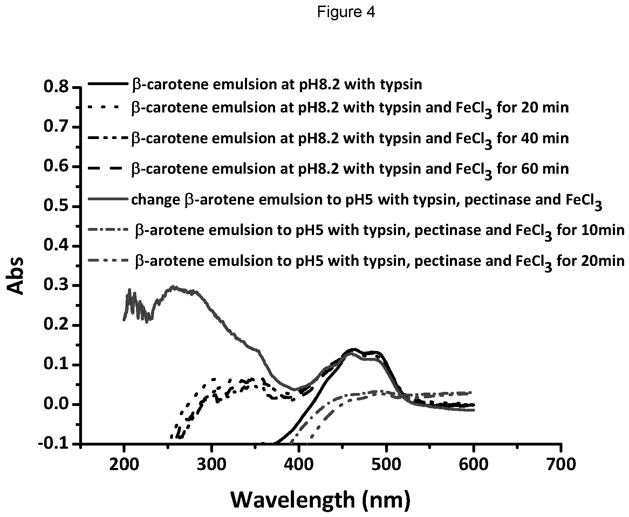

Furthermore, in order to measure the activity of the β-carotene emulsion, β-carotene was released by digestion of soy polysaccharide and pea protein using pectinase and typsin, respectively. The process is as follows: β-Carotene emulsion of 5 µL was added into 2.6 mL pH 8.2 Tris buffer (20 mM), and 400 µL typsin solution prepared by dissolving typsin in the Tris buffer with typsin concentration of 2 mg/mL was added. The β-carotene concentration in the mixture was 1.67 × 10⁻³ mg/mL. After visible spectrum measurement, 20 µL 10 mg/mL FeCl₃ was added into the mixture. These results (Figure 4) show that the characteristic absorption band of β-carotene does not change in the presence of FeCl₃. Then, the mixture was adjusted to pH 5.0, and 40 µL pectinase solution and 20 µL 10 mg/mL FeCl₃ was added into the mixture. The visible spectra then showed that the characteristic absorption band of β-carotene disappears, demonstrating that the released β-carotene can react with FeCl₃. During the spectrum measurement, the blank solution contains the same components with the same concentrations but without β-carotene. Our control experiment confirmed that in β-carotene emulsion, the characteristic absorption band of β-carotene does not change in the presence of FeCl₃ when adding typsin or pectinase only.

### Example 16: Encapsulation of Vitamin E in the droplets of complex emulsion

Firstly we used pure vitamin E as oil phase to produce emulsions. The emulsion was prepared at pH 3.25, 800 bar for 3 min with 10% oil volume fraction, 5 mg/mL pea protein and 20 mg/mL polysaccharide aqueous phase. The emulsion was heated at 90 °C for 1 h. The DLS result shown in Table 23 indicates the emulsions are not stable in salt media.

**Table 23: DLS result of the emulsions prepared at pH 3.25. Vitamin E with a volume fraction of 10% was used as oil phase.**

| **Sample** | **Storage** | **Intensity** | **Dₕ (nm)** | **PDI** |
|---|---|---|---|---|
| pH 3.25 (emulsifying pH) | fresh | 67 | 317 | 0.16 |
| | 37 days | 26 | 297 | 0.18 |
| pH 5 | fresh | 55 | 296 | 0.13 |
| | 37 days | 24 | 307 | 0.17 |
| pH 6 | fresh | 44 | 357 | 0.10 |
| | 37 days | 23 | 350 | 0.31 |
| pH 5+0.2M NaCl | fresh | 33 | 1827 | 1.0 |
| | 37 days | Creaming | | |
| pH 6+2M NaCl | fresh | 29 | 1060 | 1.0 |
| | 37 days | Creaming | | |

Considering the viscosity of vitamin E, the oil phase was changed to 40% vitamin E and 60% soybean oil mixture. The other condition is the same as above. The emulsion was produced at pH 3.75. The data in Table 24 show the droplet sizes are not sensitive to the pH and salt concentration changes, implying the emulsions will be stable in these media.

**Table 24: DLS result of the emulsions prepared at pH 3.75 with an oil volume fraction of 10%. The oil phase was composed of 40% vitamin E and 60% soybean oil.**

| **Storage condition** | **Fresh heated emulsion** | | | **After 55 days of storage** | | |
|---|---|---|---|---|---|---|
| | **Inte nsit y** | **Dₕ (nm)** | **PDI** | **Inten sity** | **Dₕ (nm)** | **PDI** |
| As prepared (pH 3.75) | 30±0 | 284±1 | 0.13±0 | 65±5 | 298±10 | 0.14±0.01 |
| pH 2 | 28±3 | 350±35 | 0.25±0.02 | 38±7 | 344±3 | 0.22±0.01 |
| pH 3 | 30±1 | 284±5 | 0.17±0.02 | 64±7 | 297±5 | 0.14±0.02 |
| pH 4 | 31±2 | 279±2 | 0.20±0.03 | 64±5 | 300±5 | 0.16±0.02 |
| pH 5 | 32±1 | 316±16 | 0.20±0.01 | 57±8 | 293±9 | 0.16±0.02 |
| pH 6 | 29±0 | 330±17 | 0.23±0.06 | 60±10 | 378±31 | 0.28±0.07 |
| pH 7 | 29±1 | 342±5 | 0.26±0.01 | 62±6 | 342±13 | 0.21±0.03 |
| pH 8 | 31±1 | 344±20 | 0.21±0.02 | 59±9 | 380±2 | 0.23±0.02 |
| pH 2+0.2M NaCl | 26±2 | 364±13 | 0.34±0.06 | 50±0 | 415±12 | 0.23±0.02 |
| pH 3+0.2M NaCl | 27±2 | 329±7 | 0.23±0.02 | 51±7 | 398±41 | 0.25±0.05 |
| pH 4+0.2M NaCl | 27±2 | 292±10 | 0.21±0.03 | 60±2 | 363±13 | 0.20±0.01 |
| pH 5+0.2M NaCl | 28±2 | 323±2 | 0.19±0.02 | 58±1 | 400±33 | 0.24±0.01 |
| pH 6+0.2M NaCl | 27±3 | 324±1 | 0.26±0.02 | 53±1 | 363±5 | 0.20±0.07 |
| pH 7+0.2M NaCl | 32±2 | 317±2 | 0.25±0.03 | Creaming | | |
| pH 8+0.2M NaCl | 32±3 | 322±3 | 0.23±0.01 | | | |

### Example 17: Influence of the weight ratio of soy protein to soy polysaccharide (WR) on the stability of soy protein/soy polysaccharide emulsions.

Table 25 shows soy protein/soy polysaccharide emulsions prepared from different weight ratios of soy protein to polysaccharide (WR). The data in Table 24 reveal the emulsions prepared from WR 1:2 to 1:6 complexes are stable against pH and salt concentration changes as well as long-term storage.

**Table 25: Influence of the weight ratio of soy protein to polysaccharide (WR) on the droplet sizes of the emulsions in different media. The emulsions were produced at pH 3.25. The protein concentration was 5 mg/mL in aqueous solution, and oil volume fraction was 10%.**

| **Sample** | | **Dₕ (nm)** | | | | |
|---|---|---|---|---|---|---|
| | | **pH 3.25 (emulsifyi ng pH)** | **pH 5** | **pH 6** | **pH 5 + 0.2 M NaCl** | **pH 6 + 0.2 M NaCl** |
| Freshly prepare d | WR 2:1 | 367 ± 15 | 379 ± 32 | 415 ± 38 | 2445 ± 345 | 2265 ± 489 |
| | WR 1:1 | 302 ± 3 | 343 ± 28 | 348 ± 28 | 1184 ± 219 | 1168 ± 285 |
| | WR 1:2 | 265 ± 18 | 271 ± 6 | 292 ± 4 | 346 ± 81 | 391 ± 1 |
| | WR 1:3 | 255 ± 12 | 275 ± 8 | 289 ± 1 | 320 ± 50 | 326 ± 40 |
| | WR 1:4 | 263 ± 15 | 289 ± 6 | 302 ± 4 | 315 ± 21 | 325 ± 30 |
| | WR 1:5 | 273 ± 11 | 298 ± 1 | 312 ± 4 | 317 ± 11 | 322 ± 1 |
| | WR 1:6 | 272± 2 | 326 ± 12 | 342 ± 14 | 327 ± 11 | 342 ± 8 |
| | WR 1:7 | 297± 2 | 342 ± 2 | 381 ± 2 | 450 ± 1 | 498 ± 3 |
| After 45 days of storage | WR 2:1 | 390 ± 11 | Creaming | | | |
| | WR 1:1 | 305 ±16 | | | | |
| | WR 1:2 | 277 ± 18 | 307 ± 6 | 294 ± 19 | 419 ± 165 | 409 ± 144 |
| | WR 1:3 | 265 ± 10 | 296 ± 6 | 303 ± 28 | 369 ± 109 | 336 ± 64 |
| | WR 1:4 | 274 ± 15 | 300 ± 5 | 307 ± 28 | 346 ± 61 | 351 ± 64 |
| | WR 1:5 | 275 ± 0 | 308 ± 6 | 320 ± 18 | 339 ± 37 | 353 ± 37 |
| | WR 1:6 | 280 ± 4 | 337 ± 12 | 345 ± 16 | 351 ± 26 | 365 ± 25 |
| | WR 1:7 | 304 ± 4 | Creaming | | | |

### Example 18: Influence of the weight ratio of pea protein to soy polysaccharide (WR) on the stability of pea protein/soy polysaccharide emulsions. Pea protein solution without centrifugation was used.

Pea protein and soy polysaccharide solutions were adjusted to pH 7.0, respectively, then were mixed and stirred for 2 h. The protein concentration was 5 mg/mL and WR was changed from 1:1 to 1:6. The mixture was emulsifying at pH 3.5 with 10% oil fraction at 800 bar for 4 min and followed by a heat treatment at 90 °C for 1 h. The data in Table 26 confirm the suitable WR values are in the range of 1:2-1:6.

### Table 26. Influence of weight ratio of pea protein to soy polysaccharide (WR) on the droplet size of pea protein/soy polysaccharide complex emulsions prepared from pea protein solution without centrifugation.

**Freshly prepared:**

| **WR** | **Storage condition** | | | | |
|---|---|---|---|---|---|
| | **As prepared** | **pH 5** | **pH 6** | **pH 5+0.2M NaCl** | **pH 6+0.2M NaCl** |
| 1:1 | 258 | 276 | 280 | 638 | 400 |
| 1:2 | 276 | 303 | 316 | 315 | 314 |
| 1:3 | 268 | 297 | 310 | 292 | 297 |
| 1:4 | 274 | 314 | 315 | 291 | 288 |
| 1:5 | 271 | 322 | 315 | 284 | 292 |
| 1:6 | 286 | 326 | 327 | 299 | 305 |

| After 63 days of storage: | | | | | |
|---|---|---|---|---|---|
| **WR** | **Storage condition** | | | | |
| | **As prepared** | **pH 5** | **pH 6** | **pH 5+0.2M NaCl** | **pH 6+0.2M NaCl** |
| 1:1 | 244 | 242 | 238 | Creaming | |
| 1:2 | 268 | 246 | 288 | 328 | 336 |
| 1:3 | 275 | 274 | 284 | 313 | 317 |
| 1:4 | 281 | 286 | 302 | 324 | 352 |
| 1:5 | 288 | 294 | 301 | 314 | 394 |
| 1:6 | 297 | 305 | 308 | 344 | 393 |

## Claims

1. Composition comprising:
a) 0.1 to 70 weight-% based on the composition of one or more fat-soluble active ingredients selected from the group consisting of lipophilic health ingredients; carotenoids as well as mixtures thereof;
b) one or more plant protein(s) selected from the group consisting of soy protein, lupin protein, pea protein and potato protein.; and
c) one or more soy soluble polysaccharide(s);
wherein the lipophilic health ingredient(s) (one or more compounds) are selected from the group consisting of resveratrol; ligusticum; ubichinones and/or ubiquinols (one or more components), preferred coenzyme Q 10, coenzyme Q 9, and/or their reduced forms (the corresponding ubiquinols); genistein and alpha-lipoic acid, and wherein the sum of the amount of protein(s) and the amount of polysaccharide(s) represents 10 to 85 weight-% based on the composition in dry matter and, wherein the weight ratio of protein(s) to polysaccharide(s) is chosen like 1 : b with the proviso that b is comprised between 0.5 and 15.

2. Composition according to claim 1, **characterized in that** carotenoids, are selected from beta-carotene, lycopene, lutein, bixin, astaxanthin, apocarotenal, beta-apo-8'-carotenal, beta-apo-12'-carotenal, canthaxanthin, cryptoxanthin, citranaxanthin and/or zeaxanthin.

3. Composition according to claim 1, **characterized in that** the plant proteins is soy or pea protein.

4. Process for the manufacture of a stable emulsion which comprises the following steps:
I) suspending the protein in water;
II) optionally removing not-dissolved protein from the suspension of step I);
III) mixing one or more soy soluble polysaccharide(s) in a weight ratio of protein(s) to polysaccharide(s) of from 1 : 0.5 to 1 : 15;
IV) adjusting the pH to a value comprised between 3 and 5
V) adding the organic phase, comprising the one or more fat-soluble active ingredients to the complex, wherein fat-soluble active ingredients are selected from the group consisting of carotenoids, resveratrol; ligusticum; ubichinones and/or ubiquinols (one or more components), preferred coenzyme Q 10, coenzyme Q 9, and/or their reduced forms (the corresponding ubiquinols); genistein and alpha-lipoic acid,
VI) homogenizing the mixture of step V) with a conventional emulsification process known to the person skilled in the art.
VII) heating the emulsion at a temperature comprised between 70 to 95°C, preferably 80 to 90°C for at least 45 minutes, preferably, at least 1 hour
VIII) optionally drying the emulsion of step VII).

5. Use of a composition as claimed in any of claims 1 to 3 for the enrichment, fortification and/or coloration of food, beverages, animal feed, cosmetics or pharmaceutical compositions.

6. Process for the manufacture of a beverage comprising the step of mixing a composition according to any one of claims 1 to 3 with further usual ingredients of beverages.

## Patentansprüche

1. Zusammensetzung, die Folgendes umfasst:
a) 0,1 bis 70 Gewichts-%, bezogen auf die Zusammensetzung, eines oder mehrerer fettlöslicher Wirkbestandteile, die aus der Gruppe ausgewählt sind, welche aus lipophilen gesundheitswirksamen Bestandteilen; Carotinoiden sowie Mischungen davon besteht;
b) ein oder mehrere Pflanzenprotein(e), das/die aus der Gruppe ausgewählt ist/sind, welche aus Sojaprotein, Lupinenprotein, Erbsenprotein und Kartoffelprotein besteht; und
c) ein oder mehrere sojalösliche Polysaccharid(e);
wobei der/die lipophile(n) gesundheitswirksame(n) Bestandteil(e) (eine oder mehrere Verbindungen) aus der Gruppe ausgewählt ist, welche aus Resveratrol; Ligusticum; Ubichinonen und/oder Ubichinolen (einer oder mehreren Komponenten), bevorzugt Coenzym Q 10, Coenzym Q 9, und/oder deren reduzierten Formen (den entsprechenden Ubichinolen); Genistein und alpha-Liponsäure besteht, und
wobei die Summe der Menge an Protein (en) und der Menge an Polysaccharid(en) 10 bis 85 Gewichts-% ausmacht, bezogen auf die Zusammensetzung nach Trockensubstanz, und wobei das Gewichtsverhältnis von Protein(en) zu Polysaccharid(en) derart gewählt ist, dass es 1 : b beträgt, mit der Maßgabe, dass b im Bereich von 0,5 bis 15 liegt.

2. Zusammensetzung gemäß Anspruch 1, **dadurch gekennzeichnet, dass** die Carotinoide aus beta-Carotin, Lycopin, Lutein, Bixin, Astaxanthin, Apocarotenal, beta-Apo-8'-carotenal, beta-Apo-12'-carotenal, Canthaxanthin, Cryptoxanthin, Citranaxanthin und/oder Zeaxanthin ausgewählt sind.

3. Zusammensetzung gemäß Anspruch 1, **dadurch gekennzeichnet, dass** es sich bei den Pflanzenproteinen um Soja- oder Erbsenprotein handelt.

4. Verfahren zur Herstellung einer stabilen Emulsion, wobei es die folgenden Schritte umfasst:
I) in Suspension bringen des Proteins in Wasser;
II) möglicherweise Entfernen nicht aufgelösten Proteins aus der Suspension des Schrittes I);
III) Einmischen eines oder mehrerer sojalöslicher Polysaccharide(s) in einem Gewichtsverhältnis von Protein (en) zu Polysaccharid(en), welches 1 : 0,5 bis 1 : 15 beträgt;
IV) Einstellen des pH-Werts auf einen Wert im Bereich von 3 bis 5
V) Zusetzen der organischen Phase, welche den einen oder die mehreren fettlöslichen Wirkbestandteil(e) umfasst, zum Komplex, wobei die fettlöslichen Wirkbestandteile aus der Gruppe ausgewählt sind, welche aus Carotinoiden, Resveratrol; Ligusticum; Ubichinonen und/oder Ubichinolen (einer oder mehreren Komponenten), bevorzugt Coenzym Q 10, Coenzym Q 9, und/oder deren reduzierten Formen (den entsprechenden Ubichinolen); Genistein und alpha-Liponsäure besteht,
VI) Homogenisieren der Mischung des Schrittes V) mittels eines herkömmlichen Emulgierverfahrens, das dem Fachmann bekannt ist.
VII) Erwärmen der Emulsion auf eine Temperatur im Bereich von 70 bis 95 °C, vorzugsweise von 80 bis 90 °C, für mindestens 45 Minuten, vorzugsweise mindestens 1 Stunde
VIII) möglicherweise Trocknen der Emulsion des Schrittes VII).

5. Verwendung einer Zusammensetzung, wie sie in beliebigen der Ansprüche 1 bis 3 beansprucht ist, zur Anreicherung, Ergänzung und/oder zum Färben von Lebensmitteln, Getränken, Tierfuttermitteln, Kosmetika oder pharmazeutischen Zusammensetzungen.

6. Verfahren zur Herstellung eines Getränks, wobei es den Schritt des Vermischung einer Zusammensetzung gemäß einem beliebigen der Ansprüche 1 bis 3 mit weiteren üblichen Bestandteilen von Getränken umfasst.

## Revendications

1. Composition comprenant :
a) de 0,1 à 70% en poids sur la base de la composition, d'un ou plusieurs ingrédients actifs liposolubles choisis dans le groupe constitué par les ingrédients diététiques lipophiles ; les caroténoïdes, ainsi que des mélanges de ceux-ci ;
b) une ou plusieurs protéines végétales choisies dans le groupe constitué par les protéines de soja, les protéines de lupin, les protéines de pois et les protéines de pomme de terre ; et
c) un ou plusieurs polysaccharides solubles du soja ; **caractérisée en ce que** le ou les ingrédients diététiques lipophiles (un ou plusieurs composés) sont choisis dans le groupe constitué par le resvératrol ; le ligusticum ; les ubiquinones et/ou les ubiquinols (un ou plusieurs composants), préférablement le coenzyme Q 10, le coenzyme Q 9, et/ou leurs formes réduites (les ubiquinols correspondants) ; la génistéine et l'acide alpha-lipoïque, et où la somme de la quantité de protéine(s) et de la quantité de polysaccharide(s) représente de 10 à 85% en poids sur la base de la composition, en matière sèche, et où le rapport pondéral de la (des) protéine(s) au(x) polysaccharide(s) est choisi tel que 1:b à condition que b soit compris entre 0,5 et 15.

2. Composition selon la revendication 1, **caractérisée en ce que** les caroténoïdes sont choisis parmi le bêta-carotène, le lycopène, la lutéine, la bixine, l'astaxanthine, l'apocaroténal, le bêta-apo-8'-caroténal, le bêta-apo-12'-caroténal, la canthaxanthine, la cryptoxanthine, la citranaxanthine et/ou la zéaxanthine.

3. Composition selon la revendication 1, **caractérisée en ce que** les protéines végétales sont des protéines de soja ou de pois.

4. Procédé de fabrication d'une émulsion stable, comprenant les étapes suivantes :
I) la suspension des protéines dans de l'eau ;
II) éventuellement, l'élimination des protéines non dissoutes à partir de la suspension de l'étape I) ;
III) le mélange d'un ou plusieurs polysaccharides solubles de soja selon un rapport pondéral de la (des) protéine(s) au(x) polysaccharide(s) allant de 1:0,5 à 1:15 ;
IV) l'ajustement du pH à une valeur comprise entre 3 et 5 ;
V) l'addition de la phase organique, comprenant les un ou plusieurs ingrédients actifs liposolubles, au complexe, où les ingrédients actifs liposolubles sont choisis dans le groupe constitué par les caroténoïdes, le resvératrol ; le ligusticum ; les ubiquinones et/ou les ubiquinols (un ou plusieurs composants), préférablement le coenzyme Q 10, le coenzyme Q 9, et/ou leurs formes réduites (les ubiquinols correspondants) ; la génistéine et l'acide alpha-lipoïque ;
VI) l'homogénéisation du mélange de l'étape V) à l'aide d'un procédé d'émulsification classique connu de l'homme de l'art ;
VII) le chauffage de l'émulsion à une température allant de 70 à 95°C, préférablement de 80 à 90°C pendant au moins 45 minutes, préférablement au moins 1 heure ;
VIII) éventuellement le séchage de l'émulsion de l'étape VII).

5. Utilisation d'une composition selon l'une quelconque des revendications 1 à 3, pour l'enrichissement, la fortification et/ou la coloration d'aliments, de boissons, d'aliments pour animaux, de cosmétiques ou de compositions pharmaceutiques.

6. Procédé de fabrication d'une boisson, comprenant l'étape consistant à mélanger une composition selon l'une quelconque des revendications 1 à 3 avec d'autres ingrédients habituels de boissons.
